# EUROPEAN PATENT APPLICATION

(11) **EP 4 332 513 A1**
(43) Date of publication of application: **06.03.2024**
(21) Application number: 22193857.4
(22) Date of filing: 05.09.2022
(51) Int. Cl.: G01D 9/00, G01D 21/02, G01K 1/022, H02J 7/00, G06F 17/40, G06Q 10/08, H04L 67/12, H04W 4/38

(54) **A LOGGER WAREHOUSE DEVICE FOR STORING AND SERVICING LOGGER DEVICES AND A METHOD OF DOING THE SAME**

(71) Applicant: Controlant hf., 201 Kopavogur (IS)
(72) Inventor: Oskarsson, Gudmundur, 221 Hafnarfjordur (IS)
(74) Representative: Inspicos P/S

(57) **Abstract**

This invention relates to a logger warehouse device and a method for storing and servicing logger devices, where the logger devices are configured to be associated to assets and measure environment related parameters of the assets while transporting the assets from an origin location to a destination location, where each logger device comprises at least a communication module and a re-chargeable power source, where the logger warehouse device comprises:
• a housing having an input area and an output area,
• a receiving unit configured to receive logger devices,
• a charging station for charging the logger devices,
• an advancing structure for advancing the receiving unit within the housing from the input area towards the output area,
• an identifier device for identifying via unique ID the receiving unit and/or the logger devices,
wherein during charging in the housing, the communication module communicates the unique ID with a computer device and the charging status of the logger devices, where the data is utilized by the computer device to identify, via the unique ID, which of the logger devices fulfils a pre-defined criteria including that the charging status of the logger devices is above a pre-define charging target level.

## Description

### FIELD OF THE INVENTION

The present invention relates to a logger warehouse device, a method and a system for storing and servicing logger devices.

### BACKGROUND OF THE INVENTION

With the expansion and growth of global sourcing in a supply chain, more prevalent interest has been placed on automatic electronic time and monitoring of environment related parameters to increase food and drug safety and improve food defense systems throughout all areas of production, processing, storage and transportation and operations. Food and drug require proper handling of environment related parameters such as temperature during transport to assure shelf quality, longevity, and safety.

Logger devices are electronic monitoring devices commonly used for these purposes, namely, to be associated to assets such as food, beverages or medicine to automatically monitor and record various environmental related parameters of the assets throughout a supply chain, such as temperature, humidity, acceleration, and air pressure, over time. A recent example of importance of such logger devices is the temperature monitoring of the COVID-19 vaccines, which is a key critical monitoring parameter.

Logger devices used for real time monitoring have a wireless communication module to allow them to transmit position data of the logger devices together with measured environmental related data for the asset wirelessly and, in that way, enable a real time supply chain monitoring during the transport of the assets. This means that position data of the logger device (and thus of the asset) together with measured environmental data such as the temperature of the assets are provided in real time. By doing so, it is possible to monitor the position and the environmental condition of the assets in real time. Thus, issues such as too high or low temperature of the assets may be identified before these issues escalate which allows for proactive actions to prevent the assets from being damaged.

After reaching end location in the supply chain, the logger devices are collected and delivered to a service centre, where they are prepared for next shipment. This may as an example include the steps of: visual inspection by an operator, inbound health scanning to verify connectivity and logger device "health", where damaged logger devices are taken aside. Further steps may include charging, outbound health scan to verify connectivity and again logger device "health check", where again, those logger devices that deviate from a given reference criterion are set aside. Additionally, some of the logger devices undergo a regular calibration check where the accuracy of the temperature us checked.

All these above-mentioned steps are manual performed discrete steps which obviously become very tedious and time demanding, in particularly considering when thousands of logger device much undergo the above-mentioned steps on a daily basis.

### SUMMARY OF THE INVENTION

It is an object of the invention to overcome the above-mentioned problem and eliminated many of said manual step and shorten the preparation time of the logger devices and more importantly to enable identifying logger devices that are somehow defected.

In a first aspect of the invention, a logger warehouse device is provided for storing and servicing logger devices, where the logger devices are configured to be associated to assets and measure environment related parameters of the assets while transporting the assets from an origin location to a destination location, where each logger device comprises at least a communication module and a re-chargeable power source, where the logger warehouse device comprises:
- a housing having an input area and an output area,
- a receiving unit configured to receive logger devices,
- a charging station for charging the logger devices,
- an advancing structure for advancing the receiving unit within the housing from the input area towards the output area, and
- an identifier device for identifying via unique ID the receiving unit and/or the logger devices,
wherein during charging in the housing, the communication module communicates the unique ID with a computer device and the charging status of the logger devices, where the data is utilized by the computer device to identify, via the unique ID, which of the logger devices fulfils a pre-defined criteria including that the charging status of the logger devices is above a pre-define charging target level.

Accordingly, the above mentioned manual discrete steps of visual inspection, scanning the logger devices, checking the charging status, charging the logger devices may be fully automatized in the logger warehouse device, where the time needed to charge the logger devices may further be utilized in performing "health-check" where it is automatically checked if various components in the logger devices, e.g. the communication module, the battery etc. is operating as it should be.

The computer device may be comprised in the logger warehouse device, or the computer device may be located externally from the logger warehouse device.

In one embodiment, the receiving unit comprises multiple of compartments designed to receive multiple of logger devices, wherein the receiving unit is configured to be connected to a power source such that charging the logger devices is performed via the receiving unit. The receiving unit may in an embodiment comprise a tray like structure comprising multiple of matrix like comportments where the logger devices are electrically connected to the receiving unit so that upon plugging the receiving unit to the power source, all the logger devices become charged.

The logger devices are moreover preferably placed in the receiving unit such that ID, which may be e.g. a QR code, placed on each logger is visible towards the identifier such that the charging status for each individual logger device may be monitored.

In one embodiment, the logger warehouse device comprises:
- a tracking module for tracking the position of the receiving unit within the housing, and
- an input unit for receiving an input command, which may be a manual command from an operator, where the input command triggers the tracking module together with the advancing structure to automatically deliver the receiving unit containing the logger devices fulfilling the pre-defined criteria to the output area of the housing.

In an embodiment, the logger warehouse device is operable connected to a packaging system, where the packaging system is configured to place assets into packaging, where the logger devices are configured to be associated to the packaging and to provide a real time monitoring of the assets while transporting each of the assets from then origin location to the destination location, wherein the received input command is generated from the packaging system when one or more logger devices is/are to be associated to a given asset.

It is thus ensured that the logger device to be associated to the given asset is fully checked and fully charged when associated to the package. As soon as the computer device identifies all the logger devices in the receiving unit to be fully charged, and the "health check" is verified as being okey, the receiving unit awaits within the logger warehouse device to be associated to shipments. The individual logger devices may be manually taken from the receiving unit and associated with the packaging, or this may be a fully automatized process, e.g. using a robotic device.

In one embodiment, the logger devices further comprise a temperature sensor configured to measure temperature conditions of the assets during the transport, wherein the receiving unit comprises at least one reference temperature probe configured to be used for calibrating or validating the temperature sensors in the logger devices. In an embodiment, each of said multiple of compartments may be provided with a reference probe which results in highly efficient solution to either calibrate each individual logger device if needed, or validate each individual logger device where the temperature measurement is compared with the reference probe to check if the temperature sensor is accurate enough. Again, the time needed to otherwise charge the logger devices may be utilized for other actions, such as the recalibration or validation.

In one embodiment, the receiving unit comprises multiple of compartments designed to receive multiple of logger devices, wherein the at least one reference temperature probe includes a single reference probe associated with each compartment and thus with a single logger device.

In one embodiment, the identifier device for identifying the logger devices comprises a scanner or reader for scanning or reading unique codes provide on the logger devices and or on the receiving unit.

In an embodiment, the receiving unit configured to receive logger devices is operable connected to a robotic system comprising robotic arms configured to place the logger devices into the receiving unit.

In an embodiment, during charging in the housing, data indicating condition of the communication module and/or the re-chargeable power source is sent to the computer device where it is determined if the performance of the communication module and/or the re-chargeable power source are within a pre-defined quality range, where in case one or both is not within the pre-defined quality range, these logger devices are marked as non-usable. In that way, an automatic solution is provided to ensure that logger devices that do not fulfil a given quality indicator are not use for next shipment of the asset.

In a second aspect of the invention, a method is provided for storing and servicing logger devices in a logger warehouse device, where the logger devices are configured to be associated to assets and measure environment related parameters of the assets while transporting the assets from an origin location to a destination location, where each logger device comprises at least a communication module and a re-chargeable power source, where the warehouse device comprises a housing having an input area and an output area, the method comprising:
- placing logger devices in a receiving unit,
- charging the logger devices in the warehouse device,
- advancing the receiving unit within a housing of the warehouse device from an input area towards an output area,
- identifying via unique ID the receiving unit and/or the logger devices,
wherein during charging in the housing, the communication module communicates the unique ID with a computer device and the charging status of the logger devices, where the data is utilized by the computer device to identify, via the unique ID, which of the logger devices fulfils a pre-defined criteria including that the charging status of the logger devices is above a pre-define charging target level.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figures 1 illustrates an embodiment of a logger warehouse device according to the present invention for storing and servicing logger devices,
Figure 2 shows an embodiment of the logger warehouse device shown in figure 1,
Figure 3 shows a receiving unit configured to receive multiple of logger device,
Figure 4 shows an embodiment of a receiving unit discussed in relation to figure 1 and 3, configured to receive the logger devices, and
Figure 5 shows a flowchart of a method according to the present invention.

### DESCRIPTION OF EMBODIMENTS

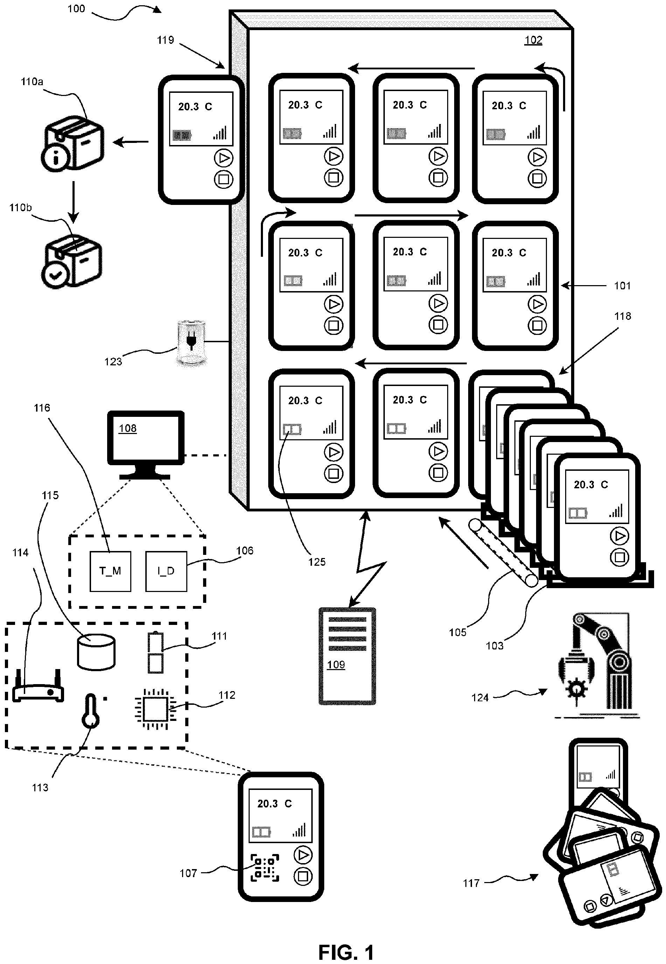

Figures 1 illustrates an embodiment of a logger warehouse device 100 according to the present invention for storing and servicing logger devices 101.

The logger devices are configured to be associated to assets placed in packaging 110, where the assets may be any type of medicine, food products, beverages or other sensitive products. The logger device are configured to measure environment related parameters of the assets while transporting the assets from an origin location to a destination location. The environment related parameters may as an example include, but is not limited to, temperature of the asset (or around the asset), humidity, light intensity, acceleration/vibration, air pressure and the like.

Each logger device is uniquely identified via unique ID 107, which may as an example be a QR code or similar means, and comprises a power source 111 which as shown here is a re-chargeable battery, a processor 112, a storage medium 115 for e.g. storing measured environmental related data, a communication module 114 for amongst other communicating with communication network such as 2G-5G cellular network, and at least one sensor 113 including a temperature sensor, but other sensors are also possible, such as humidity sensor, accelerometer, light intensity sensor, barometer, etc..

The logger warehouse device 100 comprises a housing 102 having an input area 118 and an output area 119, a receiving unit 103 configured to receive logger devices, a charging station 123 for charging the logger devices, an advancing structure 104 for advancing the receiving unit 103 within the housing from the input area towards the output area, an identifier device 106 such as a scanner or unique code reader for identifying via unique ID the receiving unit and/or the logger devices and a tracking module 116 for tracking the position of the receiving unit within the housing 102.

During charging in the housing, the communication module 114 communicates the unique ID 107 and the charging status 125 of the logger devices with a computer device, which may either be an internal computer device 108 comprised in the logger warehouse device 100, and/or the computer device may be an external computer 109, e.g. any kind of a computer platform. The unique ID 107 and the charging status 125 is utilized by the computer device to identify, via the unique ID, which of the logger devices fulfils a pre-defined criteria including that the charging status of the logger devices is above a pre-define charging target level.

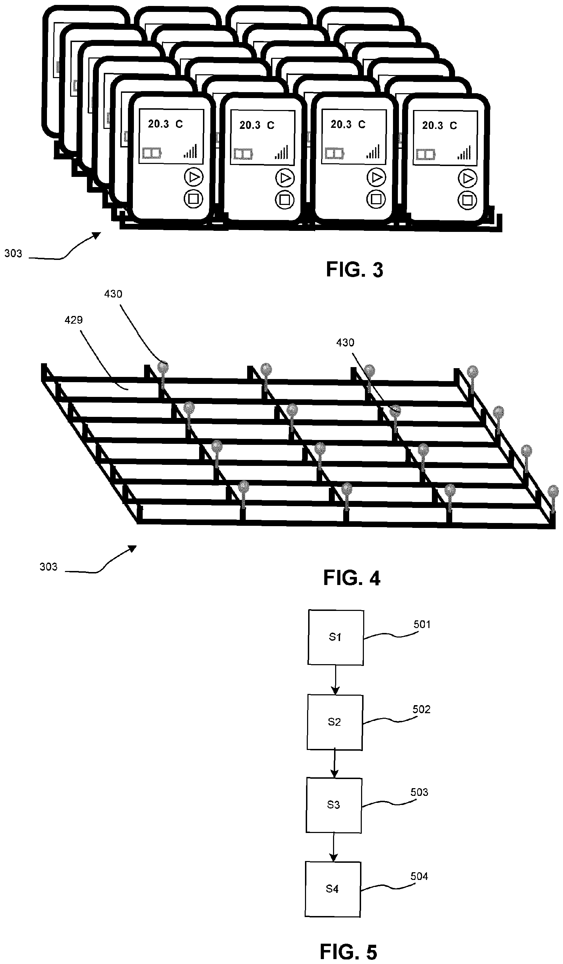

The receiving unit 103 may in an embodiment comprise multiple of compartments designed to receive multiple of logger devices, wherein the receiving unit is configured to be connected to a power source such that charging the logger devices is performed via the receiving unit. The receiving unit may also comprise a matrix like structure having multiple of lanes and rows as depicted in figure 3.

In an embodiment, the logger warehouse device 100 further comprises an input unit for receiving an input command, e.g. a manual command from an operator, where the input command triggers the tracking module 116 together with the advancing structure 105 to automatically deliver the receiving unit 103 containing the logger devices fulfilling the pre-defined criteria to the output area 119 of the housing 102.

In the embodiment shown here, the logger warehouse device 100 is operable connected to a packaging system, where the packaging system is configured to place assets into packaging 110a, where the logger devices are configured to be associated to the packaging 110b. This may be a fully, semi, or manual process, where the logger devices are delivered to the output area 109 where they are associated to the package 110a, e.g. attached to the package, placed in the package. Subsequently, the logger devices are later-on configured to provide a real time monitoring of the assets while transporting each of the assets from then origin location to the destination location.

Figure 1 further illustrates an embodiment where incoming logger devices 117 which are often accumulated in bulk, are automatically collected with a robotic system comprising robotic arms 124 and placed into the receiving unit 103. This may of course also be a manual process.

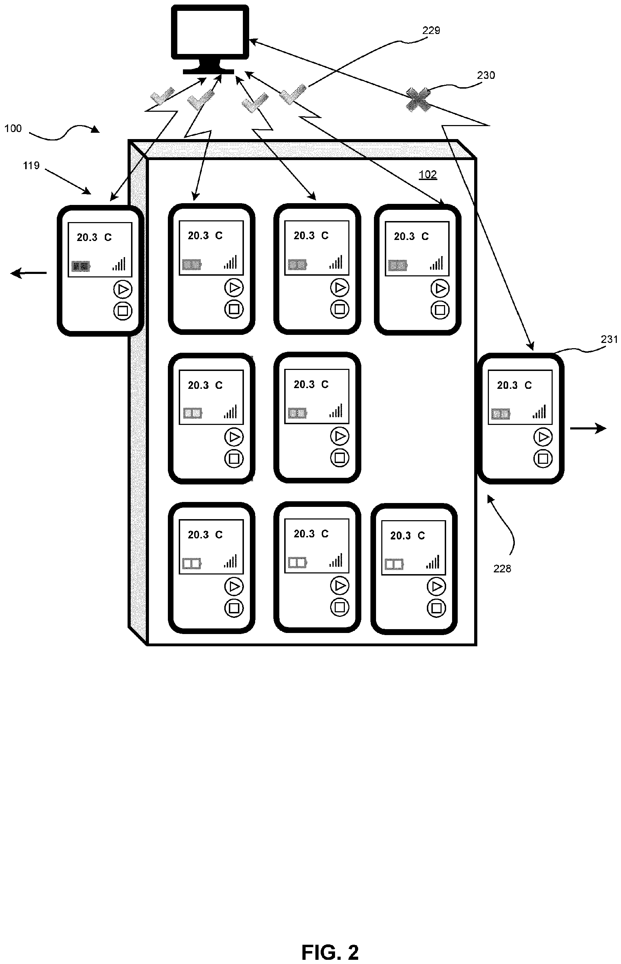

Figure 2 shows an embodiment of the logger warehouse device shown in figure 1, where during the charging in the housing 102 data indicating condition of the communication module 229, 230 and/or the re-chargeable power source is sent to the computer device 108, 109 where it is determined if the performance of the communication module and/or the re-chargeable power source are within a pre-defined quality range. In the example illustrated here a logger device 231, or logger devices in a receiving unit (now shown here) are set aside if the logger device or one or more of the logger devices in the receiving unit is not within the pre-defined quality range. In that way, an automatic solution is provided to ensure that logger devices that do not fulfil a given quality indicator are not use for next shipment of the asset.

Figure 4 shows an embodiment of a receiving unit 303 discussed in relation to figure 1 and 3, configured to receive the logger devices.

The logger devices may comprise a temperature sensor configured to measure temperature conditions of the assets during the transport. These temperature sensors are preferably, on a regular basis checked if they are accurate enough, and if that is the case they be considered to be validated. In other cases, if that is not the case, they are automatically re-calibrated until they are within pre-defined accuracy limit.

In the embodiment shown here, the receiving unit 303 comprises multiple of compartments 429 designed to receive multiple of logger devices, at least some of the compartments, or as shown here, each compartment has a single reference probe 430 associated with each compartment and thus with a single logger device.

In that way, for well defined temperature condition in the temperature sensors, e.g. several different heat ranges, of the logger warehouse device the logger devices may further validated/re-calibrated.

Figure 5 shows flowchart of an embodiment of a method according to the present invention for storing and servicing logger devices in a logger warehouse device, where the logger devices are configured to be associated to assets and measure environment related parameters of the assets while transporting the assets from an origin location to a destination location, where each logger device comprises at least a communication module and a re-chargeable power source, where the warehouse device comprises a housing having an input area and an output area.

In a first step (S1) 501, the logger devices are placed in a receiving unit.

In a second step (S2) 502, the logger devices are charged in the logger warehouse device.

In a third step (S3) 503, the receiving unit is advanced in a housing of the warehouse device from an input area towards an output area.

In a fourth step (S4) 504, the logger device(s) and/or the receiving unit is identified via unique ID.

During charging in the housing, the communication module communicates the unique ID with a computer device and the charging status of the logger devices, where the data is utilized by the computer device to identify, via the unique ID, which of the logger devices fulfils a pre-defined criteria including that the charging status of the logger devices is above a pre-define charging target level.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A logger warehouse device (100) for storing and servicing logger devices (101), where the logger devices are configured to be associated to assets and measure environment related parameters of the assets while transporting the assets from an origin location to a destination location, where each logger device comprises at least a communication module (114) and a re-chargeable power source (111), where the logger warehouse device comprises:
• a housing (102) having an input area and an output area,
• a receiving unit (103) configured to receive logger devices,
• a charging station (123) for charging the logger devices,
• an advancing structure (105) for advancing the receiving unit within the housing from the input area towards the output area,
• an identifier device (106) for identifying via unique ID (107) the receiving unit and/or the logger devices,
wherein during charging in the housing, the communication module communicates the unique ID with a computer (108, 109) device and the charging status of the logger devices, where the data is utilized by the computer device to identify, via the unique ID, which of the logger devices fulfils a pre-defined criteria including that the charging status of the logger devices is above a pre-define charging target level.

2. The logger warehouse device according to claim 1, wherein the receiving unit (103) comprises multiple of compartments (429) designed to receive multiple of logger devices, wherein the receiving unit is configured to be connected to a power source (123) such that charging the logger devices is performed via the receiving unit.

3. The logger warehouse device according to claim 1, wherein the computer device is comprised in the logger warehouse device or is located externally from the logger warehouse device.

4. The logger warehouse device according to any of the preceding claims, further comprising:
• a tracking module (116) for tracking the position of the receiving unit within the housing, and
• an input unit for receiving an input command, where the input command triggers the tracking module together with the advancing structure to automatically deliver the receiving unit containing the logger devices fulfilling the pre-defined criteria to the output area of the housing.

5. The logger warehouse device according to claim 4, wherein the logger warehouse device is operable connected to a packaging system, where the packaging system is configured to place assets into packaging (110a), where the logger devices are configured to be associated to the packaging (110b) and to provide a real time monitoring of the assets while transporting each of the assets from then origin location to the destination location, wherein the received input command is generated from the packaging system when one or more logger devices is/are to be associated to a given asset.

6. The logger warehouse device according to claim 4, wherein the input command is a manual command from an operator.

7. The logger warehouse device according to any of the preceding claims, wherein the logger devices further comprise a temperature sensor configured to measure temperature conditions of the assets during the transport, wherein the receiving unit comprises at least one reference temperature probe configured to be used for calibrating or validating the temperature sensors in the logger devices.

8. The logger warehouse device according to claim 4 or 5, wherein the receiving unit comprises multiple of compartments designed to receive multiple of logger devices, wherein the at least one reference temperature probe includes a single reference probe associated with each compartment and thus with a single logger device.

9. The logger warehouse device according to any of the preceding claims, wherein the identifier device for identifying the logger devices comprises a scanner or reader for scanning or reading unique codes provide on the logger devices and or on the receiving unit.

10. The logger warehouse device according to any of the preceding claims, wherein the receiving unit configured to receive logger devices is operable connected to a robotic system comprising robotic arms configured to place the logger devices into the receiving unit.

11. The logger warehouse device according to any of the preceding claims, wherein the during charging in the housing, data indicating condition of the communication module and/or the re-chargeable power source is sent to the computer device where it is determined if the performance of the communication module and/or the re-chargeable power source are within a pre-defined quality range, where in case one or both is not within the pre-defined quality range, these logger devices are marked as non-usable.

12. A method of storing and servicing logger devices in a logger warehouse device, where the logger devices are configured to be associated to assets and measure environment related parameters of the assets while transporting the assets from an origin location to a destination location, where each logger device comprises at least a communication module and a re-chargeable power source, where the warehouse device comprises a housing having an input area and an output area, the method comprising:
• placing (501) logger devices in a receiving unit,
• charging (502) the logger devices in the warehouse device,
• advancing (503) the receiving unit within a housing of the warehouse device from an input area towards an output area,
• identifying (504) via unique ID the receiving unit and/or the logger devices,
wherein during charging in the housing, the communication module communicates the unique ID with a computer device and the charging status of the logger devices, where the data is utilized by the computer device to identify, via the unique ID, which of the logger devices fulfils a pre-defined criteria including that the charging status of the logger devices is above a pre-define charging target level.
